# EUROPÄISCHE PATENTSCHRIFT

(11) **EP 4 195 428 B1**
(45) Veröffentlichungstag und Bekanntmachung des Hinweises auf die Patenterteilung: **17.06.2026**
(21) Anmeldenummer: 22213009.8
(22) Anmeldetag: 13.12.2022
(51) Int. Cl.: H02G 1/06, H02G 3/36

(54) **KABELLEGESYSTEM ZUR AUTOMATISIERTEN VERLEGUNG VON KABELN IN EINEM GEBÄUDE MIT EINER KABELLEGEVORRICHTUNG UND KABELLEGEVORRICHTUNG**
CABLE LAYING SYSTEM FOR THE AUTOMATED LAYING OF CABLES IN A BUILDING, COMPRISING A CABLE LAYING DEVICE AND CABLE LAYING DEVICE
SYSTÈME DE POSE DE CÂBLES POUR LA POSE AUTOMATISÉE DE CÂBLES DANS UN BÂTIMENT COMPRENANT UN SYSTÈME DE POSE DE CÂBLES ET SYSTÈME DE POSE DE CÂBLES

(30) Priorität: 13.12.2021 DE 102021132837
(43) Veröffentlichungstag der Anmeldung: 14.06.2023
(73) Patentinhaber: Goodville GmbH, 22605 Hamburg (DE)
(72) Erfinder: Mühlhans, Christoph, 22605 Hamburg (DE); Mühlhans, Friederike, 22605 Hamburg (DE)
(74) Vertreter: RGTH

(56) Entgegenhaltungen:
- CN-A- 112 332 306
- JP-A- 2019 140 712
- US-A1- 2020 358 277

## Beschreibung

Die vorliegende Erfindung betrifft ein Kabellegesystem zur automatisierten Verlegung von Kabeln in einem Gebäude, umfassend eine Kabellegevorrichtung, insbesondere einen Kabelinstallationsroboter, mit einer fahrbaren Basis und einer auf der Basis angeordneten Verlegeeinheit ausgebildet zum Verlegen eines Kabels. Ferner betrifft die vorliegende Erfindung eine Kabellegevorrichtung sowie ein Kabel für ein solches Kabellegesystem.

### Technologischer Hintergrund

Beim Bau oder bei der Renovierung von Gebäuden, wie Gewerbe- oder Wohnimmobilien, insbesondere Wohnhäusern oder Wohnungen, muss für eine bedürfnisangepasste Elektroinstallation gesorgt werden, in deren Rahmen Kabel, insbesondere elektrische Leitungen, Stromauslässe sowie Lichtschalter und in jüngerer Zeit auch intelligente, insbesondere mit dem Internet verbundene Elektrovorrichtungen für das sogenannte SmartHome installiert werden. Derartige Installationsarbeiten sind zeitaufwendig und kostenintensiv. Hinzu kommt, dass sich mit der wachsenden Anzahl von zu installierenden Einrichtungen und der damit wachsenden Anzahl von zu verlegenden Kabeln der Dokumentationsbedarf ständig erhöht. So ist es erforderlich, dass auch noch nach vielen Jahren ohne Probleme ermittelt werden kann, an welcher Stelle Kabel in einer Wand oder in einem Mauerwerk eines Gebäudes verlegt sind, welchem Zweck diese dienen und mit welchen Vorrichtungen sie verbunden sind.

Aus der US 2020/0358277 A1 sind eine Vorrichtung und ein Verfahren zum Verlegen von fiberoptischen Kabeln in einem Datencenter unter der Verwendung eines oder mehrerer Kabelverlegeroboter bekannt. In der Vorrichtung und dem Verfahren wird ein Algorithmus zur Routenberechnung verwendet. Die Position der Kabel wird berechnet und optimiert. Die Enden der Kabel können mit einem Barcode oder einem RFID-Identifizierer versehen sein. In einer Datenbank werden der Zustand aller Kabel sowie deren Anfangs- und Endpositionen hinterlegt.

Die CN 212676780 U offenbart einen Kabellegeroboter mit Navigation und automatischer Hindernisvermeidung. Der Roboter umfasst ein LIDAR-System und ein Gyroskop, welche eine intelligente Navigation ermöglichen und es dem Kabellegeroboter erlauben, selbstständig an einen vorher bestimmten Ort zu fahren.

Aus der EP 3 836 325 A1 sind ein Rohrbündel und ein Rohrsystem bekannt. Das Rohrbündel umfasst eine Anzahl von Rohren aus einem Polymermaterial, die in einer Hülle aus Polymermaterial angeordnet sind, wobei wenigstens ein Rohr an oder in seiner Außenoberfläche eine Rohrkennzeichnung aufweist, die sich wiederholend zueinander beabstandet ausgebildet ist.

Die EP 2 226 902 A1 beschreibt ein Kabel, auf dem eine Markierung angebracht ist. Ein Teil der Markierung identifiziert das Kabel und wird in Längsrichtung des Kabels wiederholt. Ein zweiter Teil der Markierung verändert sich entlang des Kabels. Ein Teil der Markierung kann als Barcode oder QR-Code ausgebildet sein.

Die JP 2019-140712 A offenbart ein Kabelverlegungsmanagementsystem, welches auf Kabeln aufgedruckte Identifikationsinformationen nutzt. Die Identifikationsinformationen werden mittels einer Bildverarbeitung erkannt.

Aus der CN 112332306 A ist Verfahren zum Verlegen von Kabeln bekannt.

### Darstellung der Erfindung: Aufgabe, Lösung, Vorteile

Es ist Aufgabe der vorliegenden Erfindung, ein Kabellegesystem zur automatisierten Verlegung von Kabeln in einem Gebäude bereitzustellen, mit welchem Kabel für eine Elektroinstallation effizient und mit geringem Zeitaufwand verlegt werden können, und welches es gewährleistet, für spätere Wartungs- und Renovierungsvorhaben die verlegten Kabel sicher aufzufinden.

Zur Lösung der der Erfindung zugrundeliegenden Aufgabe wird ein Kabellegesystem zur automatisierten Verlegung von Kabeln in einem Gebäude vorgeschlagen, umfassend eine Kabellegevorrichtung, insbesondere einen Kabelinstallationsroboter, mit einer fahrbaren Basis und einer auf der Basis angeordneten Verlegeeinheit ausgebildet zum Verlegen eines Kabels, wobei ferner vorgesehen ist, dass die Kabellegevorrichtung eine Positionsbestimmungseinheit zur Bestimmung der Position verlegter Kabelabschnitte umfasst, und wobei das Kabellegesystem ausgebildet ist, die Position verlegter Kabelabschnitte in einer Speichervorrichtung abzuspeichern, dass die Kabellegevorrichtung einen Teleskoparm und/oder Klapparm aufweist, wobei die Verlegeeinheit an dem Teleskoparm und/oder Klapparm befestigt ist, dass die Positionsbestimmungseinheit Lagesensoren zur Bestimmung einer Ausrichtung und einer horizontalen Lage der Kabellegevorrichtung, und Stellungssensoren zur Bestimmung der Stellung oder Position der an dem Teleskoparm oder Klapparm befestigten Verlegeeinheit umfasst, dass die Kabellegevorrichtung eine Sensoranordnung umfasst, wobei die Sensoranordnung zum Erstellen eines Grundrisses und/oder eines 3D-Modells eines Raums des Gebäudes ausgebildet ist, und dass das Kabellegesystem eine Rechenvorrichtung umfasst, wobei die Rechenvorrichtung ausgebildet ist unter Verwendung eines erstellten Grundrisses oder 3D-Modells einen Verlegeplan zu erstellen, wobei der Verlegeplan die Position oder Lage der zu verlegenden Kabel bzw. Kabelabschnitte und von elektrischen Einrichtungen oder Modulen umfasst.

Das Kabellegesystem umfasst eine Kabellegevorrichtung, welche ausgebildet ist, Kabel, insbesondere Elektrokabel bzw. elektrische Leitungen, in einem Gebäude, beziehungsweise in einer Wand oder einem Mauerwerk eines Gebäudes, zu verlegen. Zu diesem Zweck weist die Kabellegevorrichtung eine fahrbare Basis und eine Verlegeeinheit auf. Die fahrbare Basis dient dem Verfahren der Kabellegevorrichtung in dem Gebäude und insbesondere entlang der Wände des Gebäudes. Mittels der Verlegeeinheit wird die Kabellegevorrichtung befähigt, die Kabel in dem Raum zu verlegen.

Erfindungsgemäß ist dabei vorgesehen, dass die Kabellegevorrichtung eine Positionsbestimmungseinheit aufweist. Die Positionsbestimmungseinheit dient dazu, die Position der verlegten Kabelabschnitte, das heißt insbesondere die Lage, Ausrichtung und Höhe der verlegten Kabelabschnitte in oder an der Wand oder dem Mauerwerk zu bestimmen. Das Kabellegesystem ist ferner erfindungsgemäß ausgebildet, die Position verlegter Kabelabschnitte in einer Speichervorrichtung abzuspeichern. Es wird somit möglich, die tatsächliche oder Ist-Position der verlegten Kabel schon während des Vorgangs des Verlegens zu bestimmen und abzuspeichern, sodass ein exakter Plan von den installierten Kabeln sowie gegebenenfalls der tatsächlichen Position von Anschlussdosen erstellt werden kann. Für spätere Wartungs- oder Renovierungsarbeiten können dann auch unterputzverlegte Kabel problemlos aufgefunden und den mit den Kabeln verbundenen Anschlussdosen, Lichtschaltern oder weiteren elektrischen Einrichtungen, wie z.B. SmartHome-Einrichtungen, zugeordnet werden.

Der nach dem Verlegen der Kabel aus den Daten der Speichervorrichtung ermittelbare exakte Plan von den wirklichen Positionen der verlegten Kabel oder Kabelabschnitte kann zur Grundlage für weitere Installationsarbeiten auch anderer Gewerke dienen.

Bevorzugt können die Positionen verlegter Kabelabschnitte weiteren Informationen zugeordnet und zusammen mit diesen abgespeichert werden. Ferner kann der aus den abgespeicherten Daten erhältliche digitale Plan der Elektroinstallation mit dem fortlaufenden Baufortschritt vervollständigt werden.

Die Positionen verlegter Kabelabschnitte werden dabei bevorzugt in einer Datenbank der Speichervorrichtung gespeichert.

Mit weiterem Vorteil ist vorgesehen, dass das Kabellegesystem ausgebildet ist, einen Installationsplan der verlegten Kabelabschnitte zu erzeugen.

Insbesondere ist das Kabellegesystem somit nicht nur ausgebildet, die Position verlegter Kabelabschnitte abzuspeichern, sondern zudem auch die Positionen der verlegten Kabelabschnitte in einen, bevorzugt digitalen, Grundriss eines Gebäudes oder eines Raumes des Gebäudes einzufügen.

Bevorzugt ist ferner vorgesehen, dass das Kabellegesystem ein zu verlegendes Kabel umfasst, wobei das zu verlegende Kabel in regelmäßigen Abständen eine Kennzeichnung, bevorzugt einen maschinenlesbaren Code, aufweist, und/oder wobei die Kabellegevorrichtung eine Kennzeichnungsvorrichtung aufweist, wobei die Kennzeichnungsvorrichtung ausgebildet ist, bevorzugt beim Verlegen des Kabels, das Kabel in regelmäßigen Abständen mit einer Kennzeichnung, bevorzugt mit einem maschinenlesbaren Code, zu versehen.

Bei der Kennzeichnung kann es sich insbesondere um einen maschinenlesbaren Code wie einen Barcode, einen Strichcode, einen QR-Code oder Mikro-QR-Code oder um einen farblichen Code handeln. Darüber hinaus kann die Kennzeichnung auch in Form von Kerben in einem Isolationsmaterial des Kabels oder in Form von Aufklebern auf dem Kabel ausgebildet sein. Die Kennzeichnung kann durch Bedrucken, durch Prägen oder durch Fräsen in das Isolationsmaterial des zu verlegenden Kabels eingebracht werden.

Durch die in regelmäßigen Abständen vorgesehene Kennzeichnung kann jeder Kabelabschnitt mit seinen Daten, wie Position, Länge, Lage, Höhe, Ausrichtung, dessen Verbindung zu anderen Kabelabschnitten, den IP-Adressen von mit den Kabelabschnitten verbundenen elektrischen Einrichtungen, wie SmartHome-Einrichtungen, den Herstellerdaten oder dem Verlegedatum erfasst werden und in der Speichervorrichtung abgespeichert werden. Hierdurch ist eine lückenlose und vollständige Dokumentation der verlegten Kabel bzw. der Elektroinstallation möglich. Insbesondere werden gegenüber aus dem Stand der Technik bekannten Verfahren nicht nur die Kabelenden mit einer Kennzeichnung versehen, sondern jedes Kabel, insbesondere jeder Kabelabschnitt weist auch zwischen den Kabelenden in regelmäßigen Abständen Kennzeichnungen auf, anhand derer, zusammen mit weiteren Informationen, der Verlauf jedes Kabels in dem Mauerwerk oder in der Wand nachverfolgt werden kann.

Die Kabellegevorrichtung kann in diesem Zusammenhang eine Materialbevorratung, insbesondere eine Kabelrolle, aufweisen, auf der das gekennzeichnete oder zu kennzeichnende Kabel angeordnet und bevorratet ist.

Ist eine Kennzeichnungsvorrichtung vorgesehen, so ist diese insbesondere ausgebildet, direkt vor oder während des Verlegens des Kabels die Kennzeichnung aufzubringen. Damit kann gleichzeitig mit der erfassten Position des Kabels oder des Kabelabschnitts auch die aufgebrachte Kennzeichnung in der Speichervorrichtung abgespeichert werden.

Bevorzugt ist daher vorgesehen, dass jeder Kabelabschnitt eine Kennzeichnung aufweist, und/oder dass die Kennzeichnungsvorrichtung ausgebildet ist, jeden Kabelabschnitt mit einer Kennzeichnung zu versehen.

Die Kabelabschnitte können dabei eine vorbestimmte Länge von beispielsweise einem Meter oder weniger aufweisen. Somit wird es möglich, jeden Kabelabschnitt anhand seiner Kennzeichnung zu identifizieren und dessen Position in einer Wand oder einem Mauerwerk eines Gebäudes mittels der in der Speichervorrichtung abgelegten Positionen der verlegten Kabelabschnitte zu lokalisieren.

Besonders bevorzugt ist vorgesehen, dass die Kennzeichnung eine unendliche und/oder fortlaufende Kennzeichnung ist, wobei die Kennzeichnung sich in Abständen entlang des Kabels von weniger als 5 cm, bevorzugt von weniger als 3 cm, besonders bevorzugt von weniger als 1 cm, ändert, so dass jeder Kabelabschnitt mit einer Länge von weniger als 5 cm, bevorzugt von weniger als 3 cm, besonders bevorzugt von weniger als 1 cm, individuell gekennzeichnet ist.

Die Kennzeichnung verändert sich somit auf sehr kurzen Längenskalen von beispielsweise weniger als 5 cm, sodass jeder entsprechend kurze Kabelabschnitt eindeutig identifiziert und lokalisiert werden kann.

Besonders bevorzugt ist es dabei, dass es sich bei der Kennzeichnung um einen unendlichen und/oder fortlaufenden maschinenlesbaren Code handelt. Dieser kann beispielsweise aus einfarbigen Linien in Art eines Barcodes ausgebildet sein, welcher längs des Kabels verschieden breite Linien oder verschieden breite Zwischenräume aufweist. Die Kennzeichnung ändert sich quasi jeden Zentimeter und kennzeichnet so eindeutig den jeweiligen Kabelabschnitt.

Mit weiterem Vorteil ist vorgesehen, dass das Kabel eine Abschirmung aufweist, und/oder dass das Kabel eine Isolierung aufweist, wobei die Isolierung des Kabels ganz oder teilweise aus einem durchsichtigen Material besteht, wobei das durchsichtige Material ausgebildet ist, eingekoppeltes Licht zu leiten.

Das durchsichtige Material kann beispielsweise in Form eines in die Isolierung eingebetteten Lichtleiters ausgebildet sein. Das durchsichtige Material ermöglicht es, Licht in ein Ende eines verlegten Kabels einzukoppeln und anhand des aus dem anderen Ende des Kabels austretenden Lichts dieses eindeutig zu identifizieren und die entsprechenden Kabelenden einander zuzuordnen.

Bevorzugt ist ferner vorgesehen, dass das Kabellegesystem ausgebildet ist, die Position verlegter Kabelabschnitte zusammen mit der auf dem Kabelabschnitt angeordneten Kennzeichnung in der Speichervorrichtung abzuspeichern.

Insbesondere bevorzugt kann vorgesehen sein, dass das Kabellegesystem ausgebildet ist, die Position verlegter Kabelabschnitte zusammen mit weiteren Informationen, insbesondere mit der Länge und/oder der Lage und/oder der Ausrichtung der verlegten Kabelabschnitte, und/oder mit den Kennzeichnungen weiterer mit dem jeweiligen Kabelabschnitt verbundener Kabelabschnitte, und/oder mit den IP-Adressen von mit den verlegten Kabelabschnitten verbundenen oder zu verbindenden Modulen, und/oder einem Datum, in der Speichervorrichtung abzuspeichern.

Dabei kann vorgesehen sein, dass diese Daten im BIM-Format (Building Information Modelling) abgespeichert werden. Durch das Abspeichern dieser Informationen, bevorzugt zusammen mit der Kennzeichnung des jeweiligen Kabelabschnittes, sowie der Position des Kabelabschnittes in der Speichervorrichtung kann später jeder sichtbare oder freigelegte Kabelabschnitt identifiziert werden.

In modernen Gebäuden werden zunehmend intelligente Module, insbesondere intelligente elektrische Einrichtungen, sogenannte SmartHome-Einrichtungen, eingesetzt. Derartige intelligente Module oder Einrichtungen können mittels der von dem Kabellegesystem verlegten Kabel miteinander und/oder mit dem Internet in einem Datenaustausch stehen. Zu diesem Zweck ist jedem der Module eine IP-Adresse zugeordnet. Werden somit auch die IP-Adressen der mit dem verlegten Kabelabschnitt verbundenen oder zu verbindenden Modulen abgespeichert, so kann bei einer Störung für jedes Modul anhand der Daten in der Speichervorrichtung der jeweilige mit dem Modul verbundene Kabelabschnitt identifiziert und in der Wand oder dem Mauerwerk hinsichtlich der Position lokalisiert werden. Dies ermöglicht die schnelle Wartung oder Reparatur von Fehlern in der Elektroinstallation.

Die Module können auch Anschlussdosen, Stromauslässe oder Steckdosen, Schalter, Sensoren, Leuchten, Tür- oder Fenster-Kontakt, Bedienfelder, WLAN-Sender, LiFi-Sender oder Kabelanschlüsse umfassen.

Ferner kann vorgesehen sein, dass die Kabellegevorrichtung einen Kennzeichnungssensor zum Erfassen und/oder Lesen der Kennzeichnung des Kabels aufweist.

Dies ist insbesondere dann von Vorteil, wenn das Kabel bzw. das zu verlegende Kabel bereits ab Werk eine Kennzeichnung aufweist und diese nicht erst mittels einer Kennzeichnungsvorrichtung der Kabellegevorrichtung auf das zu verlegende Kabel aufgebracht wird. Je nach Art der Kennzeichnung ist der Kennzeichnungssensor entsprechend ausgebildet. Handelt es sich bei der Kennzeichnung um einen Barcode oder Strichcode, so ist entsprechend ein Barcode- oder Strichcodeleser vorgesehen. Bei einem farblichen Code ist der Kennzeichnungssensor ausgebildet, den farblichen Code zu erfassen. Dies kann beispielsweise über eine Kameraeinrichtung erfolgen.

Mit weiterem Vorteil ist vorgesehen, dass die Kabellegevorrichtung eine Fräseinheit umfasst, wobei die Fräseinheit ausgebildet ist, einen Kabelkanal in einer Wand oder einem Mauerwerk des Gebäudes herzustellen, wobei die Verlegeeinheit ausgebildet ist, einen zu verlegenden Kabelabschnitt in einem von der Fräseinheit hergestellten Kabelkanal zu verlegen.

Die Fräseinheit ist insbesondere zur Herstellung von Bohrungen oder Schlitzungen in der Wand oder in dem Mauerwerk ausgebildet. Daher kann die Fräseinheit ein Topfbohrer und/oder einen Langlochbohrer und/oder eine Trennscheibe und/oder weitere geeignete Werkzeuge bzw. Kombinationen dieser Werkzeuge umfassen. Darüber hinaus kann vorgesehen sein, dass die jeweiligen Werkzeuge der Fräseinheit, wie Topfbohrer, Langlochbohrer oder Trennscheibe, austauschbar sind.

Bevorzugt ist weiter vorgesehen, dass die Fräseinheit an dem Teleskoparm befestigt ist.

Anstelle eines Teleskoparms kann auch ein Klapparm vorgesehen sein beziehungsweise der Teleskoparm kann zusätzlich als ein Klapparm ausgebildet sein. Es ist auch möglich, dass mehrere Teleskoparme oder Klapparme vorgesehen sind, wobei an einem ersten Teleskoparm die Verlegeeinheit und an einem zweiten Teleskoparm die Fräseinheit angeordnet ist. Mittels des oder der Teleskop- und/oder Klapparme kann die Fräseinheit und/oder die Verlegeeinheit in vertikaler und/oder horizontaler Richtung bewegt werden, um somit die Möglichkeit zu schaffen, an jedem Ort in der Wand Kabel zu verlegen.

Darüber hinaus ist es auch möglich, dass mittels des Teleskops- oder Klapparms eine Verlegung von Kabeln oder Kabelabschnitten in einer Decke oder in einem Boden eines Raumes oder eines Gebäudes erfolgen kann. Die Fräs- und/oder die Verlegeeinheit können die Kabel vertikal oder horizontal verlegen. Ferner kann vorgesehen sein, dass die Fräs- und/oder die Verlegeeinheit ausgebildet sind, die Kabel oder Kabelabschnitte in Kurven entsprechend einem Mindestbiegeradius der Kabel zu verlegen.

Die Fräs- und/oder Verlegeeinheit können ausgebildet sein, über Kopf zu arbeiten, sodass ein Verlegen von Kabeln in der Raumdecke möglich wird.

Ferner kann vorgesehen sein, dass die Kabellegevorrichtung eine Staubabsaugvorrichtung aufweist.

Die Staubabsaugvorrichtung ist insbesondere in, an oder bei der Fräseinheit angeordnet, um den beim Fräsen oder Schlitzen oder Bohren der Wand anfallenden Staub unmittelbar abzusaugen. Die Staubabsaugvorrichtung kann einen Auffangbehälter aufweisen. Die Staubabsaugvorrichtung kann als eine bewegliche Absaugglocke ausgebildet sein, welche um die gesamte Fräseinheit und/oder Verlegeeinheit herum angeordnet ist.

Ferner kann vorgesehen sein, dass die Kabellegevorrichtung eine Spachteleinheit und/oder eine Trockenstufe zur Trocknung eines Spachtelmaterials umfasst.

Somit ist es in einer Ausgestaltung möglich, dass die Kabellegevorrichtung nicht nur ausgebildet ist, ein Kabel in einem Kabelkanal zu verlegen, sondern auch anschließend den Kabelkanal zu verspachteln und die Wand gegebenenfalls zu glätten. Um eine möglichst schnelle Weiterbearbeitung der Wand zu ermöglichen, kann auch eine Trockenstufe zur Trocknung des Spachtelmaterials vorgesehen sein.

Die Spachteleinheit und/oder die Trockenstufe kann ebenfalls an dem Teleskop- oder Klapparm befestigt sein, oder es kann ein separater Teleskop- oder Klapparm für die Spachteleinheit und/oder die Trockenstufe vorgesehen sein.

Erfindungsgemäß ist vorgesehen, dass die Kabellegevorrichtung eine Sensoranordnung umfasst, wobei die Sensoranordnung zum Erstellen eines Grundrisses und/oder eines 3D-Modells eines Raums des Gebäudes ausgebildet ist.

Mittels der Sensoranordnung kann die Kabellegevorrichtung ihren genauen Standort in dem Raum oder in dem Gebäude erfassen. Ferner kann die Kabellegevorrichtung den Raum auf den Bauzustand scannen und mögliche Schäden oder Hindernisse im Arbeitsweg erfassen.

Aufgrund des von mittels der Sensoranordnung erstellten Grundrisses erfolgt die Verlegung der Kabel anhand von tatsächlichen Grundrissdaten. Es wird sich somit nicht ausschließlich auf eine zuvor vorhandene Bauplanung verlassen. Ferner können die Position der verlegten Kabel oder Kabelabschnitte in einen digitalen Bauplan eingefügt werden, welcher dem tatsächlichen Grundriss des Raumes entspricht. Das Kabellegesystem, insbesondere eine Rechenvorrichtung des Kabellegesystems oder der Kabellegevorrichtung, kann ausgebildet sein, den vermessenen Grundriss mit dem Bauplan vergleichen, eine Installationsplanung aus dem Bauplan in den vermessenen Grundriss oder ein 3D-Modell des Raums zu übertragen, bzw. die richtige Lage von notwendigen Modulen und/oder elektrischen Einrichtungen für einen Installationsplan oder Verlegeplan vor Ort und vor Arbeitsbeginn zu berechnen.

Die Sensoreinrichtung kann einen Laser-Scanner und/oder einen LIDAR-Scanner und/oder einen Peilsender und/oder einen Peilempfänger und/oder einen GPS-Empfänger und/oder einen Kompass umfassen.

Mittels des Peilsenders oder des Peilempfängers können beispielsweise Referenzpunkte im Raum gemessen werden. GPS-Empfänger und Kompass ermöglichen es zudem, die geografische Lage und Himmelsrichtung oder Ausrichtung der Kabellegevorrichtung zu ermitteln. Durch die präzise Vermessung des Grundrisses, insbesondere der Wände, Decke und Boden des Raumes, können nicht im Bauplan vorhandene Unebenheiten oder Hindernisse, wie bereits auf der Rohbauwand verlegte Kabel, Rohre oder an der Wand angebrachte Putzschienen, erfasst werden und entsprechend bei der Verlegung der Kabel berücksichtigt werden.

Die Sensoranordnung ermöglicht es der Kabellegevorrichtung zudem, sich im Raum zu orientieren, eine Navigation im Raum durchzuführen und gegebenenfalls vorhandene Hindernisse zu umfahren.

Mit weiterem Vorteil kann vorgesehen sein, dass die Positionsbestimmungseinheit die Sensoranordnung umfasst.

Die Positionsbestimmungsvorrichtung kann somit auch die Sensoranordnung umfassen, bzw. auf deren Sensorsignale zurückgreifen. Mittels der Lagesensoren können die Ausrichtung und die horizontale Lage der Kabellegevorrichtung bestimmt werden. Die Stellungssensoren können dazu dienen, die Stellung oder Position des Teleskop- oder Klapparms und damit auch der darin angeordneten Verlegeeinheit oder Fräseinheit im dreidimensionalen Raum zu bestimmen. Unter Verwendung der Lagesensoren und/oder Stellungssensoren und/oder der Sensoranordnung können die Positionen der verlegten Kabel in oder an der Wand präzise bestimmt werden.

Mit weiterem Vorteil ist vorgesehen, dass die Kabellegevorrichtung einen Sensor zur Bestimmung einer Materialbeschaffenheit von Wänden oder von einem Mauerwerk des Gebäudes aufweist.

Dies ermöglicht es der Kabellegevorrichtung die Werkzeuge, wie beispielsweise der Fräseinheit, entsprechend auszuwählen oder einzustellen, um die Materialbeschaffenheit der Wände oder des Mauerwerks zu berücksichtigen. Insbesondere können Beschädigungen oder durch die Materialbeschaffenheit der Wand gegebene Hindernisse identifiziert werden.

In einer bevorzugten Ausführungsform ist vorgesehen, dass die Kabellegevorrichtung ausgebildet ist, verlegte Kabelabschnitte und/oder Module, insbesondere elektrische Einrichtungen, bevorzugt Anschlussdosen, Steckdosen, Schalter, Sensoren, zu verschalten.

Mittels der Kabellegevorrichtung des Kabellegesystems können somit weitere Schritte für die Herstellung der Elektroinstallation in einem Raum oder einem Gebäude vorgenommen werden. So können die von der Verlegeeinheit der Kabellegevorrichtung verlegten Kabel von der Kabellegevorrichtung eigenständig mit elektrischen Einrichtungen oder Modulen, Anschlussdosen, Steckdosen, Schaltern oder Sensoren verbunden werden, wodurch diese Tätigkeiten nicht mehr von Hand vorgenommen werden müssen.

Ferner kann die Kabellegevorrichtung ausgebildet sein, verlegte Kabel oder Kabelabschnitte am richtigen Punkt abzuschneiden, und/oder mit einer Klemme zu verbinden und/oder die Klemme in einer Unterputzdose festzusetzen. Ferner kann vorgesehen sein, dass die Kabellegevorrichtung ausgebildet ist, ein verlegtes Kabel oder einen verlegten Kabelabschnitt für die Leitung von Strom freizugeben. Auch kann die Kabellegevorrichtung ausgebildet sein, eine Klemme auszulesen und/oder eine IP-Adresse eines verlegten oder zu verlegenden Moduls zu ermitteln und/oder und in einen Speicher eines Moduls Orts- und Verbindungsdaten einzuspeichern.

Die Kabellegevorrichtung kann auch ausgebildet sein, eingesetzte Klemmen mit den Modulen, insbesondere, intelligenten SmartHome-Einrichtungen, Anschlussdosen, Stromauslässen oder Steckdosen, Schaltern, Sensoren, Leuchten, Tür- oder Fenster-Kontakten, Bedienfeldern, WLAN-Sendern, LiFi-Sendern oder Kabelanschlüssen, zu verbinden.

Erfindungsgemäß ist vorgesehen, dass das Kabellegesystem eine Rechenvorrichtung umfasst, wobei die Rechenvorrichtung ausgebildet ist, bevorzugt in Abhängigkeit von Vorgaben, einen Verlegeplan zu erstellen, wobei der Verlegeplan die Position oder Lage der zu verlegenden Kabel bzw. Kabelabschnitte, und von elektrischen Einrichtungen oder Modulen umfasst. Die elektrischen Einrichtungen oder Module können Anschlussdosen, Steckdosen, Schalter, Sensoren, umfassen.

Das Kabellegesystem ist somit in der Lage, gegebenenfalls anhand von externen Vorgaben, einen Verlegeplan für die zu verlegenden Kabel zu erstellen. Somit kann, sollten seitens des Bauplans keine Spezifizierungen vorgegeben sein, das Kabellegesystem eigenständig die optimale Lage von Modulen, Schaltern, Steckdosen und Sensoren oder Anschlussdosen etc. berechnen und die Arbeiten entsprechend ausführen. Die externen Vorgaben können dabei detailliert sein, und die Anzahl und Position von elektrischen Einrichtungen oder Modulen, Anschlussdosen, Steckdosen, Schaltern, Sensoren, vorgeben, sodass das Kabellegesystem dann im Wesentlichen nur den Verlegeplan für die zu verlegenden Kabel bestimmt. Es ist aber auch möglich, dass die externen Vorgaben lediglich die Anzahl der elektrischen Einrichtungen oder Module, Anschlussdosen, Steckdosen, Schalter, Sensoren, vorgeben, so dass das Kabellegesystem auch die optimalen Positionen für diese Elemente ermittelt. Ferner können die externen Vorgaben auch die Position von bereits verlegten Leitungen für Wasser, Gas oder von die Statik bestimmenden Elementen umfassen.

Mit weiterem Vorteil ist vorgesehen, dass die Rechenvorrichtung ein Verfahren der künstlichen Intelligenz ausführt.

Das Verfahren der künstlichen Intelligenz dient insbesondere dazu, anhand der erfassten Daten, wie beispielsweise von der Kabellegevorrichtung erstellten Grundrissen oder 3D-Modellen, der externen Vorgaben oder der Wandbeschaffenheit, den Verlegeplan zu erstellen.

Bevorzugt ist ferner vorgesehen, dass die Kabellegevorrichtung Mittel für eine Aufputz-Verlegung zu verlegender Kabel oder Kabelabschnitte aufweist.

Somit kann die Kabellegevorrichtung Vorrichtungen für das Aufkleben, Heißkleben oder Anheften von Kabeln auf einer Rohbauwand, für die Aufputzmontage oder zum späteren Einputzen der Kabel aufweisen.

Ferner ist bevorzugt vorgesehen, dass die fahrbare Basis der Kabellegevorrichtung Räder aufweist, wobei die Räder um eine Vertikalachse, vorzugsweise um 180°, weiter bevorzugt um 360°, schwenkbar sind.

Es können drei, vier oder mehr Räder vorgesehen sein.

Die Kabellegevorrichtung kann mittels der Räder an den Wänden eines beispielsweise rechteckigen Raums von Wandecke zu Wandecke entlangfahren. Erreicht die Kabellegevorrichtung eine Raumecke, drehen sich alle vier Räder um 90°, und die Fahrt der Kabellegevorrichtung wird im rechten Winkel fortgesetzt, um die Kabellegevorrichtung entlang der nächsten Wand zu verfahren und dort Kabel zu verlegen.

Ferner kann vorgesehen sein, dass das Kabellegesystem eine zentrale Datenverarbeitungsvorrichtung, insbesondere einen Server, aufweist.

Die zentrale Datenverarbeitungsvorrichtung kann dabei die Rechenvorrichtung des Kabellegesystems umfassen oder ergänzend zu der Rechenvorrichtung der Kabellegevorrichtung Aufgaben übernehmen. Insbesondere ist es möglich, dass die zentrale Datenverarbeitungsvorrichtung die Speichervorrichtung umfasst, um die von der Positionsbestimmungseinheit bestimmten Positionen der verlegten Kabel oder Kabelabschnitte zu speichern.

Darüber hinaus kann vorgesehen sein, dass die zentrale Datenverarbeitungsvorrichtung den Bauplan und/oder externe Vorgaben oder Installationsaufgaben an die Kabellegevorrichtung sendet. Es kann ferner vorgesehen sein, dass die Kabellegevorrichtung bei der Ausführung der Kabelverlegung in einem ständigen Kontakt mit der zentralen Datenverarbeitungsvorrichtung steht. Somit können während des Einsatzes der Kabellegevorrichtung die in der Speichervorrichtung der zentralen Datenverarbeitungsvorrichtung hinterlegten Positionen der Kabel und Kabelabschnitte und der Baufortschritt fortwährend aktualisiert werden.

Die zentrale Datenverarbeitungsvorrichtung kann dabei auch eine dem Gebäude oder dem Raum zugeordnete, fest installierte Datenverarbeitungsvorrichtung sein. Beispielsweise kann die zentrale Datenverarbeitungsvorrichtung den Server für SmartHome-Einrichtungen ausführen. Mit anderen Worten ist dann das Gebäude und/oder der Raum mit der zentralen Datenverarbeitungseinrichtung ausgestattet, welche sowohl für die Ansteuerung der SmartHome-Einrichtungen, die Überwachung der Elektroinstallation als auch für die Erstellung des tatsächlichen Installationsplans der verlegten Kabel vorgesehen ist.

Ferner bevorzugt ist vorgesehen, dass die zentrale Datenverarbeitungsvorrichtung ausgebildet ist, die Abschirmung und/oder eine Ader eines verlegten Kabels mit einer hochfrequenten Wechselspannung zu beaufschlagen, und/oder, dass die zentrale Datenverarbeitungsvorrichtung ausgebildet ist, Licht in das durchsichtige Material der Isolierung des Kabels einzukoppeln.

Insbesondere wenn später, beispielsweise bei einer Renovierungsaufgabe, die verlegten Kabel oder Kabelabschnitte identifiziert und lokalisiert werden sollen, ist es von Vorteil, wenn mittels der zentralen Datenverarbeitungsvorrichtung die verlegten Kabel angesteuert oder angesprochen werden können, um diese aufzufinden. So kann beispielsweise die Datenverarbeitungsvorrichtung ausgebildet sein, die Abschirmung und/oder eine Ader eines verlegten Kabels mit einer hochfrequenten Wechselspannung zu beaufschlagen. Hierdurch wirkt die Abschirmung oder die Ader des Kabels wie eine Funkantenne. Die von der Abschirmung oder der Ader erzeugte elektromagnetische Strahlung kann beispielsweise mit einem tragbaren Datenverarbeitungsgerät, wie beispielsweise einem Mobiltelefon, empfangen und geortet werden. Hierdurch wird es möglich, die verlegten Kabel aufzufinden.

Ist die zentrale Datenverarbeitungsvorrichtung zudem dazu ausgebildet, Licht in ein durchsichtiges Material einer Isolierung eines Kabels einzukoppeln, kann das an dem anderen Kabelende austretende Licht dazu genutzt werden, um ein Kabel zu identifizieren. Hierfür ist bevorzugt an mindestens einem Ende jedes verlegten Kabels eine Lichtquelle, beispielsweise eine LED-Lichtquelle, vorhanden. Diese lässt sich über die zentrale Datenverarbeitungsvorrichtung an- und ausschalten.

Mit weiterem Vorteil kann eine Software-Applikation für ein tragbares Datenverarbeitungsgerät vorgesehen sein, wobei mittels der auf dem tragbaren Datenverarbeitungsgerät ausgeführten Software-Applikation die Positionen verlegter Kabelabschnitte, bevorzugt mit einem Erweiterte-Realität-Verfahren, dargestellt werden können.

Das tragbare Datenverarbeitungsgerät kann dabei als Mobiltelefon, insbesondere Smartphone, ausgebildet sein. Mittels der Softwareapplikation können die Positionen und weitere den Kabeln oder Kabelabschnitten zugeordnete Informationen aus der Speichervorrichtung des Kabellegesystems ausgelesen werden. Unter Verwendung der Sensoren des tragbaren Datenverarbeitungsgeräts, wie beispielsweise Lagesensoren oder der Kamera, können die verlegten Kabel im Rahmen eines Erweiterte-Realität-Verfahrens bzw. Augmented-Reality-Verfahrens auf einem Bildschirm des tragbaren Datenverarbeitungsgeräts dargestellt werden. Die verlegten Kabel erscheinen dann in Originalgröße mit allen Angaben quasi schwebend vor der Wand.

Sind Module, wie beispielsweise intelligente elektrische Einrichtungen, insbesondere SmartHome-Einrichtungen, oder, bevorzugt mit einer IP-Adresse versehene, Anschlussdosen, Stromauslässe oder Steckdosen, Schalter, Sensoren, Leuchten, Tür- oder Fenster-Kontakte, Bedienfelder, WLAN-Sender, LiFi-Sender oder Kabelanschlüsse vorgesehen, so kann auch vorgesehen sein, dass mittels des tragbaren Datenverarbeitungsgeräts die IP-Adresse oder eine andere geeignete Kennzeichnung ausgelesen wird, und dass mittels der Software-Applikation dann die Positionen der dem Modul zugeordneten Kabel oder Kabelabschnitte aus der Speichervorrichtung ausgelesen werden. Anschließend können die verlegten Kabel im Rahmen eines Erweiterte-Realität-Verfahrens bzw. Augmented-Reality-Verfahrens auf dem Bildschirm des tragbaren Datenverarbeitungsgeräts dargestellt werden.

Ferner wird ein Kabel für ein vorbeschriebenes Kabellegesystem bereitgestellt, wobei das Kabel in regelmäßigen Abständen eine Kennzeichnung, bevorzugt einen maschinenlesbaren Code, aufweist.

Sämtliche vorstehend im Zusammenhang mit dem Kabel für das Kabellegesystem beschriebenen Funktionen, Eigenschaften und Merkmale können in entsprechender Weise auch auf das erfindungsgemäße Kabel übertragen werden.

Somit kann bevorzugt vorgesehen sein, dass die Kennzeichnung eine unendliche und/oder fortlaufende Kennzeichnung ist, wobei die Kennzeichnung sich in Abständen entlang des Kabels von weniger als 5cm, bevorzugt von weniger als 3 cm, besonders bevorzugt von weniger als 1 cm, ändert, so dass jeder Kabelabschnitt mit einer Länge von weniger als 5 cm, bevorzugt von weniger als 3 cm, besonders bevorzugt von weniger als 1 cm, individuell gekennzeichnet ist.

Weiter kann bevorzugt vorgesehen sein, dass das Kabel eine Abschirmung aufweist, und/oder dass das Kabel eine Isolierung aufweist, wobei die Isolierung des Kabels ganz oder teilweise aus einem durchsichtigen Material besteht, wobei das durchsichtige Material ausgebildet ist, eingekoppeltes Licht zu leiten.

Es wird zudem eine Kabellegevorrichtung, insbesondere ein Kabelinstallationsroboter, für ein vorbeschriebenes Kabellegesystem bereitgestellt.

Sämtliche im Zusammenhang mit der Kabellegevorrichtung des vorstehend beschriebenen Kabellegesystems erläuterten Funktionen, Merkmale und Ausgestaltungen können in entsprechender Weise auf die erfindungsgemäße Kabellegevorrichtung übertragen werden.

Die Kabellegevorrichtung umfasst bevorzugt eine auf der fahrbaren Basis drehbar montierte Grundplatte und/oder ein auf der fahrbaren Basis drehbar montiertes Gehäuse.

Auf der Grundplatte oder in oder an dem Gehäuse befindet sich der motorische Antrieb des Fahrgestells und/oder der bewegliche Teleskop- oder Klapparme.

Die Grundplatte oder das Gehäuse kann ferner eine Stromversorgung in Form einer Batterie oder eines Kabelanschlusses aufweisen.

Darüber hinaus kann die Grundplatte oder das Gehäuse eine Materialbevorratung, beispielsweise eine Kabelrolle, und/oder ein Reservoir für Spachtelmasse, und/oder Unterputzdosen, und/oder Kabelverbindermodule und/oder Anschlussmodule und/oder Klemmen aufweisen.

Ferner weist die Grundplatte und/oder das Gehäuse eine Kennzeichnungsvorrichtung zum individuellen Kennzeichnen der Kabel entsprechend der Einbauposition und der Verwendung auf.

Die Kennzeichnungsvorrichtung kann alternativ auch an einem Teleskop- oder Klapparm angeordnet sein.

Das Gehäuse umfasst ferner eine Recheneinheit zur Auswertung von Daten einer Sensoranordnung, zur Steuerung, zur Kommunikation mit der zentralen Datenverarbeitungsvorrichtung oder mit der Speichervorrichtung. Die Recheneinheit kann ferner eine WLAN-Antenne aufweisen.

Die Rechenvorrichtung kann zudem zur Durchführung von künstliche Intelligenz-Verfahren ausgebildet sein.

Ferner kann vorgesehen sein, dass die Grundplatte oder das Gehäuse eine Bedieneinheit zum Einschalten der Kabellegevorrichtung, wie beispielsweise ein Touchdisplay oder ähnliches, aufweist.

Die Kabellegevorrichtung kann darüber hinaus Warnleuchten und optische Anzeigen zum Markieren oder Absperren des Arbeitsbereiches während des Betriebes aufweisen.

### Kurze Beschreibung der Figuren

Die Erfindung wird nachstehend näher anhand der beigefügten Figuren erläutert. Es zeigen:
- Fig. 1: ein Kabellegesystem mit einer Kabellegevorrichtung,
- Fig. 2: eine erste Ausführungsform einer Kabellegevorrichtung,
- Fig. 3: ein Kabel für ein Kabellegesystem,
- Fig. 4: eine zweite Ausführungsform einer Kabellegevorrichtung, und
- Fig. 5: eine dritte Ausführungsform einer Kabellegevorrichtung.

### Ausführliche Beschreibung der Figuren

In den Figuren sind identische oder einander entsprechende Elemente mit den gleichen Bezugszeichen gekennzeichnet.

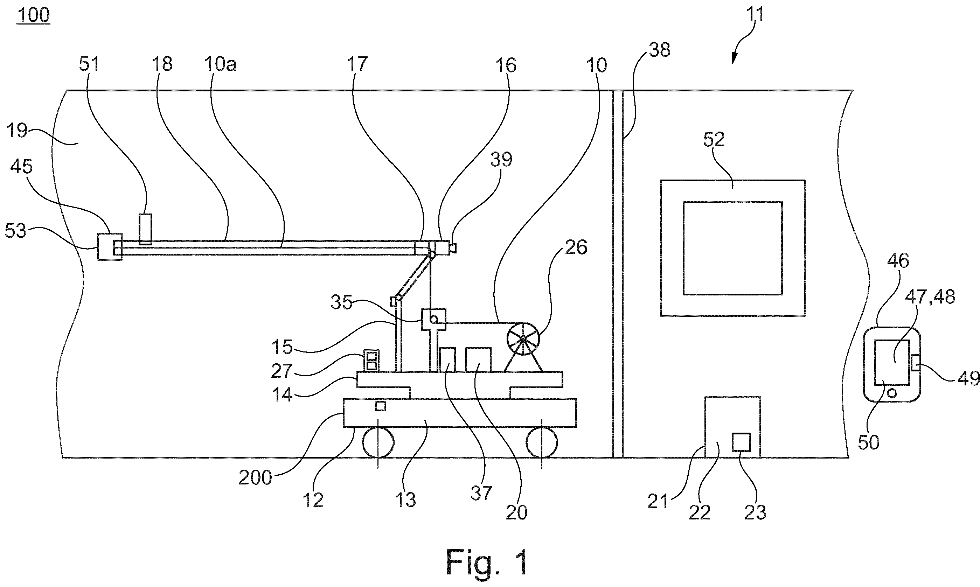

Fig. 1 zeigt eine schematische Darstellung eines Kabellegesystems 100 zur automatisierten Verlegung von Kabeln 10 in einem Gebäude 11. Das Kabellegesystem 100 umfasst eine Kabellegevorrichtung 200, welche als Kabelinstallationsroboter 12 ausgebildet ist. Die Kabellegevorrichtung 200 umfasst eine fahrbare Basis 13 und eine auf der Basis 13 drehbar angeordnete Grundplatte 14. Ferner ist auf der Grundplatte 14 ein Teleskoparm 15 angeordnet, an dem endseitig eine Fräseinheit 16 und eine Verlegeeinheit 17 angeordnet sind. Die Fräseinheit 16 ist ausgebildet ist, einen Kabelkanal 18 in eine Wand 19 des Gebäudes 11 einzufräsen. Die Verlegeeinheit 17 ist ausgebildet, ein Kabel 10 in den von der Fräseinheit 16 hergestellten Kabelkanal 18 einzulegen. Die Kabellegevorrichtung 200 ist zudem mit einer Positionsbestimmungseinheit 20 zur Bestimmung der Position verlegter Kabelabschnitte 10a ausgestattet. Das Kabellegesystem 100 umfasst ferner eine als Server 21 ausgebildete zentrale Datenverarbeitungsvorrichtung 22 mit einer Speichervorrichtung 23. In der Speichervorrichtung 23 werden die mit der Positionsbestimmungseinheit 20 bestimmten Positionen der verlegten Kabelabschnitte 10a abgespeichert.

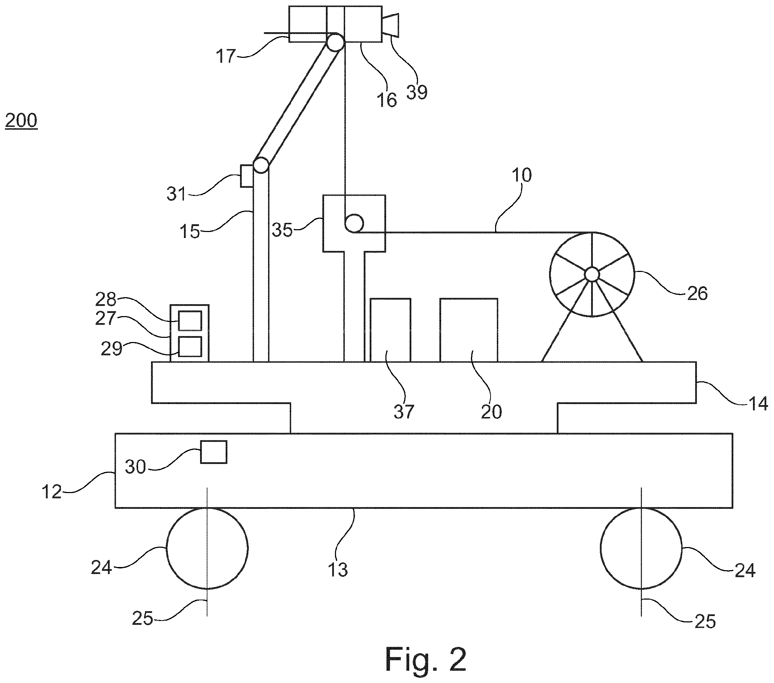

Fig. 2 zeigt eine Kabellegevorrichtung 200 für das Kabellegesystem 100 nach Fig. 1. Die als Kabelinstallationsroboter 12 ausgebildete Kabellegevorrichtung 200 umfasst eine fahrbare Basis 13 mit vier Rädern 24, welche um 360° um eine Vertikalachse 25 drehbar angeordnet sind. Auf der Basis 13 ist eine Grundplatte 14 drehbar angeordnet. Auf der drehbaren Grundplatte 14 ist wiederum ein Teleskoparm 15 angeordnet, an dem endseitig die Fräseinheit 16 zur Herstellung eines Kabelkanals 18 in der Wand des Gebäudes 11 sowie die Verlegeeinheit 17 zum Verlegen eines Kabels 10 in einen von der Fräseinheit 16 hergestellten Kabelkanal 18 angeordnet sind. Das zu verlegende Kabel 10 ist auf einer auf der Kabellegevorrichtung 200 angeordneten Kabeltrommel 26 bevorratet und wird von dieser zu der Verlegeeinheit 17 geführt. Für die Bestimmung der Position der verlegten Kabelabschnitte 10a ist die Positionsbestimmungseinheit 20 mit einer Sensoranordnung 27 versehen, wobei die Sensoranordnung 27 einen LIDAR-Scanner 28 und einen GPS-Empfänger 29 umfasst. Ferner sind Lagesensoren 30 für die Bestimmung der Ausrichtung der Kabellegevorrichtung 200 sowie Stellungssensoren 31 zur Erfassung der Stellung des Teleskoparmes 15 vorgesehen. Anhand der Daten der Sensoranordnung 27, der Lagesensoren 30 und der Stellungssensoren 31 kann die Positionsbestimmungseinheit 20 die Position der verlegten Kabelschnitte 10a, das heißt die Ausrichtung, Länge, Höhe, etc. der Kabelschnitte in der Wand 19 des Gebäudes 11 präzise bestimmen und in der Speichervorrichtung 23 abspeichern.

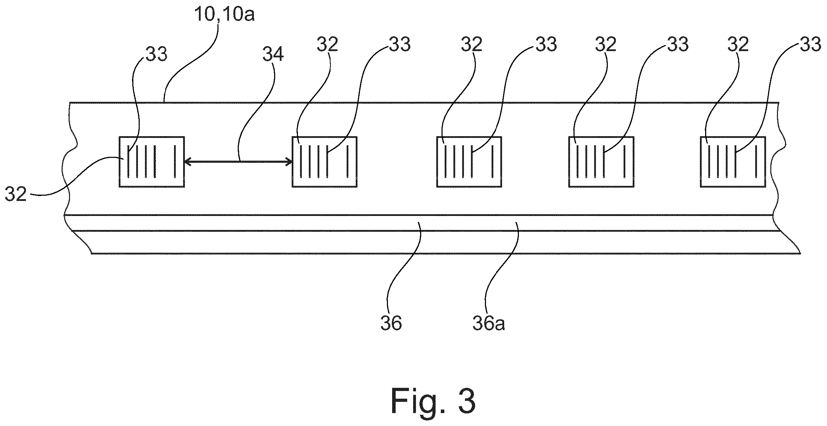

Das zu verlegende Kabel 10 weist dabei, wie in Fig. 3 gezeigt eine Kennzeichnung 32 in Form eines maschinenlesbaren Codes 33 auf, welche in regelmäßigen Abständen 34 von beispielsweise 5 cm auf dem Kabel 10 angebracht ist. Die Kennzeichnung 32 kann bereits vorab vom Hersteller des Kabels 10 aufgebracht sein. In der dargestellten Ausführungsform nach Fig. 1 und 2 weist jedoch die Kabellegevorrichtung 200 eine Kennzeichnungsvorrichtung 35 auf, welche ausgebildet ist, das von der Kabeltrommel 26 abgerollte und von der Verlegeeinheit 17 zu verlegende Kabel 10 fortwährend mit der Kennzeichnung 32 zu versehen, indem die Kennzeichnungsvorrichtung 35 die Kennzeichnung 32 beispielsweise auf das Kabel 10 aufdruckt. Durch die Kennzeichnung 32 wird jeder Kabelabschnitt 10a mit einer Länge von 5 cm, je nach Anwendungsbedarf auch mit geringeren Längen, individuell gekennzeichnet. Das Kabel 10 weist ferner einen eingebetteten Lichtleiter 36 aus einem durchsichtigen Material 36a auf, welcher es ermöglicht, an einem Ende des Kabels 10 Licht einzukoppeln und am anderen Ende das Licht auszulesen. Mit dieser Maßnahme wird eine nachträgliche Identifizierung und Zuordnung der verschiedenen Kabelenden in einer Elektroinstallation möglich.

Zurückkehrend zur Kabellegevorrichtung 200 nach Fig. 2 ist diese für die sichere Positionsbestimmung der verlegten Kabelabschnitte zudem ausgebildet, zunächst mittels der Sensoranordnung 27 eine Vermessung des Raumes, in dem das Kabel 10 verlegt werden soll, durchzuführen. Hierdurch wird ein präziser Grundriss bzw. ein präzises 3D-Modell des Raums erhalten. Dabei erfasst eine Rechenvorrichtung 37 der Kabellegevorrichtung 200 anhand der Sensordaten auch Hindernisse, welche bei einer Verlegung des Kabels 10 berücksichtigt bzw. umsteuert werden müssen. Derartige Hindernisse können Türstürze, Fensterrahmen 52 oder bereits verlegte Leitungen 38 für Wasser oder Gas sein. Für die Verlegung des Kabels 10 ist die Rechenvorrichtung 37 der Kabellegevorrichtung 200 ausgebildet, einen Verlegeplan für das Kabel 10 zu berechnen, in dem diese Hindernisse entsprechend berücksichtigt sind. Anhand des Verlegeplans verlegt die Kabellegevorrichtung 200 dann das Kabel 10. Darüber hinaus weist die Kabellegevorrichtung 200 nach Fig. 2 einen Sensor 39 zur Bestimmung der Materialbeschaffenheit der Wand 19 auf. Beispielsweise kann ein Feuchtigkeitssensor oder ein Härtegradsensor vorgesehen sein. Dies ermöglicht es der Kabellegevorrichtung 200, die Betriebsparameter der Fräseinheit 16 und der Verlegeeinheit 17 derart einzustellen, dass eine möglichst saubere und schnelle Verlegung des Kabels 10 gewährleistet wird.

Die Rechenvorrichtung 37 der Kabellegevorrichtung 200 kann von der zentralen Datenverarbeitungsvorrichtung 22 des Kabellegesystems 100 einen Bauplan und weitere Vorgaben für die Verlegung des Kabels 10 erhalten. Die weiteren Vorgaben können beispielsweise in der Anzahl und der Position vorzusehender Module 53, wie Steckdosen, Lichtschalter oder elektronischen Vorrichtungen für das SmartHome, bestehen. Anhand des Bauplanes, dem unter Verwendung der Sensoranordnung 27 erfassten Grundriss des Raumes sowie der weiteren Vorgaben errechnet die Rechenvorrichtung 37 der Kabellegevorrichtung 200 unter Anwendung eines Verfahrens künstlicher Intelligenz einen effizienten Verlegeplan für das Kabel 10, in dem sämtliche Vorgaben berücksichtigt werden. Nachdem die Kabellegevorrichtung 200 den Verlegeplan erstellt hat, nimmt diese die Arbeit auf und beginnt mit der Fräseinrichtung 16 den Kabelkanal 18 anzufertigen und anschließend das zu verlegende Kabel 10 mittels der Verlegeeineit 17 in dem Kabelkanal 18 abzulegen. Dabei erfasst die Kabellegevorrichtung 200 mittels der Positionsbestimmungseinheit 20 fortwährend die Position der verlegten Kabelabschnitte 10a sowie die jeweilige auf dem Kabel 10 angeordnete Kennzeichnung 32. Die Kennzeichnung 32 und die Positionen der Kabelabschnitte 10a werden in der Speichervorrichtung 23 abgespeichert und können später wieder ausgelesen werden, um bei Renovierungsarbeiten die verlegten Kabel 10 sicher identifizieren und lokalisieren zu können. Hierfür kann ferner vorgesehen sein, dass für jedes verlegte Kabel 10 in der Speichervorrichtung 23 zusätzlich weitere Informationen, wie beispielsweise die Länge, die Ausrichtung der verlegten Kabelabschnitte 10a oder die Kennzeichnung 32 weiterer mit dem jeweiligen Kabelabschnitt 10a verbundenen Kabelabschnitte 10a, oder die IP-Adressen von mit den verlegten Kabelabschnitten 10a verbundenen oder zu verbindenden Modulen 53 wie SmartHome-Einrichtungen, Anschlussdosen, Steckdosen, Schalter, Sensoren etc. abgespeichert werden.

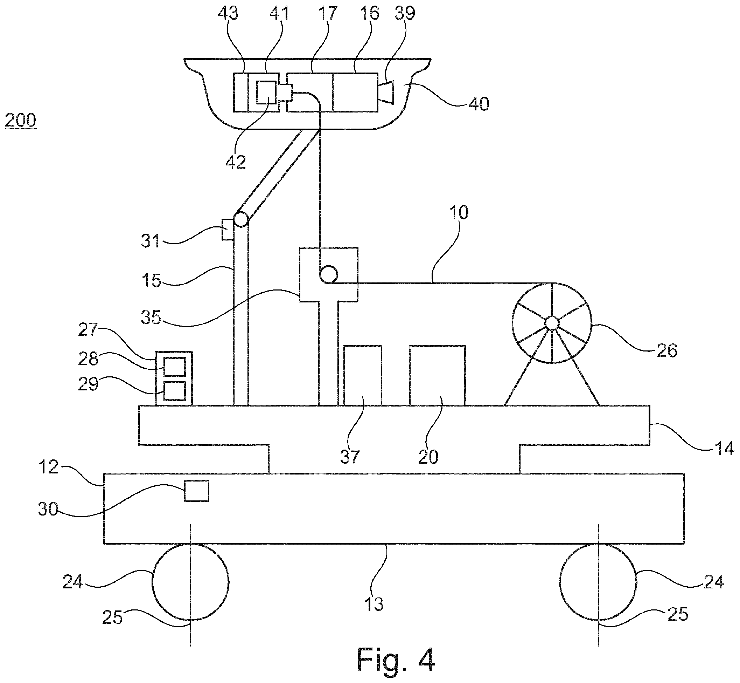

In der Fig. 4 ist eine weitere Kabellegevorrichtung 200 dargestellt. Die Kabellegevorrichtung der Fig. 4 umfasst zusätzlich endseitig am Teleskoparm 15 und die Fräseinheit 16 und die Verlegeeinheit 17 umschließend eine Staubabsaugvorrichtung 40, welche den durch die Fräseinheit 16 erzeugten Baustaub beim Herstellen der Kabelkanäle 18 absaugt. Darüber hinaus weist die Kabellegevorrichtung 200 noch eine Spachteleinheit 41 mit einem Reservoir 42 für Spachtelmasse und eine Trockenstufe 43 auf. Nachdem die Verlegeeinheit 17 das Kabel 10 in den von der Fräseinheit 16 erzeugten Kabelkanal 18 eingelegt hat, wird der offene Kabelkanal 18 von der Spachteleinheit 41 mit der Spachtelmasse geschlossen und die nachfolgend über den verspachtelten Kabelkanal geführte Trockenstufe 43 dient der Trocknung des Spachtelmaterials.

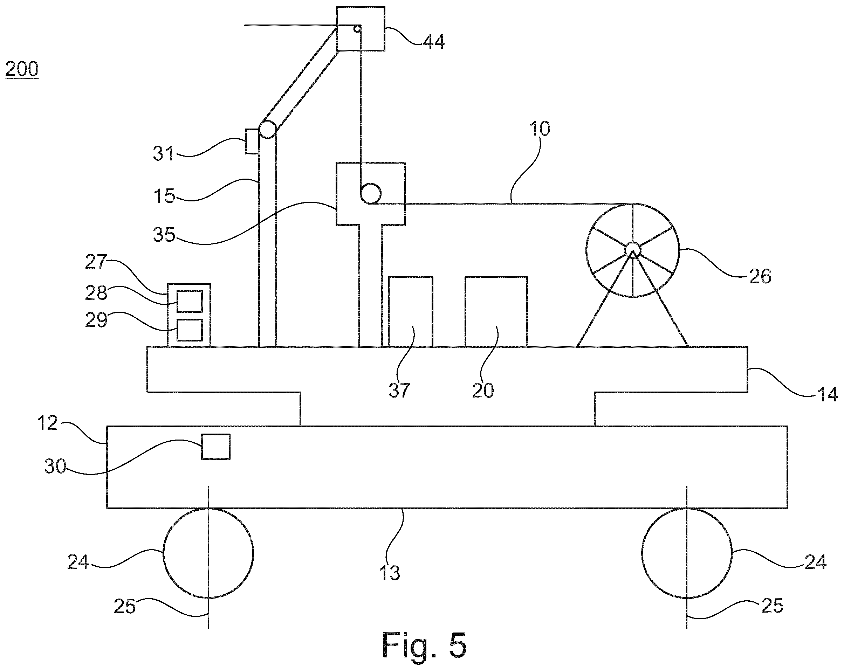

In der Fig. 5 ist eine weitere Kabellegevorrichtung 200 dargestellt. Die in der Fig. 5 gezeigte Kabellegevorrichtung 200 ist dabei für eine Aufputzverlegung eines Kabels 10 ausgebildet und weist entsprechend Mittel 44 zum Verkleben oder zum Anheften der Kabel auf.

Wieder bezugnehmend auf Fig. 1 ist die zentrale Datenverarbeitungsvorrichtung 22 dauerhaft dem Raum oder dem Gebäude 11 zugeordnet. Die zentrale Datenverarbeitungsvorrichtung 22 ist als Server 21 für intelligente SmartHome-Einrichtungen 45 ausgebildet. Anhand der in der Speichervorrichtung 23 zusammen mit den Positionen abgespeicherten Kennzeichnungen 32 der Kabelabschnitte 10a sowie der IP-Adressen von mit den verlegten Kabelabschnitten 10a verbundenen SmartHome-Einrichtungen 45 können nach der Verlegung der Kabel 10 bei auftretenden Fehlern einer SmartHome-Einrichtung 45 die betroffenen Kabel 10 lokalisiert werden. Zur Anzeige der Position des betroffenen Kabels 10 umfasst das System 100 ferner eine Softwareapplikation 46, welche auf einem tragbaren Datenverarbeitungsgerät 47 wie einem Smartphone 48 ausgeführt wird. Die Softwareapplikation 46 ruft die Daten betreffend die Position und die Funktion der verlegten Kabel 10 von der Speichervorrichtung 23 der zentralen Datenverarbeitungsvorrichtung 22 ab und nutzt ferner die Sensoren 49 des Datenverarbeitungsgerätes 47, wie beispielsweise Lagesensoren und eine Kamera, um auf einem Bildschirm 50 in einem Erweiterte-Realität-Verfahren die verlegten Kabel 10 anzuzeigen. Auf dem Display oder Bildschirm 50 des tragbaren Datenverarbeitungsgerätes 47 werden dann die verlegten Kabel 10 zusammen mit den zugehörigen Informationen gewissermaßen schwebend vor der Wand 19 angezeigt.

Die zentrale Datenverarbeitungsvorrichtung 22 kann zudem ausgebildet sein, eine LED-Lichtquelle 51 an- und auszuschalten, mit welcher diese Licht in den Lichtleiter 36 des Kabels 10 einkoppeln kann. Hierdurch können Kabelenden einander zugeordnet werden.

### Liste der Bezugszeichen

- 100: Kabellegesystems
- 200: Kabellegevorrichtung
- 10: Kabel
- 10a: Kabelabschnitt
- 11: Gebäude
- 12: Kabelinstallationsroboter
- 13: Basis
- 14: Grundplatte
- 15: Teleskoparm
- 16: Fräseinheit
- 17: Verlegeeinheit
- 18: Kabelkanal
- 19: Wand
- 20: Positionsbestimmungseinheit
- 21: Server
- 22: Zentrale Datenverarbeitungsvorrichtung
- 23: Speichervorrichtung
- 24: Rad
- 25: Vertikalachse
- 26: Kabeltrommel
- 27: Sensoranordnung
- 28: LIDAR-Scanner
- 29: GPS-Empfänger
- 30: Lagesensor
- 31: Stellungsensor
- 32: Kennzeichnung
- 33: Maschinenlesbarer Code
- 34: Abstand
- 35: Kennzeichnungsvorrichtung
- 36: Lichtleiter
- 36a: Durchsichtiges Material
- 37: Rechenvorrichtung
- 38: Leitung
- 39: Sensor
- 40: Staubabsaugvorrichtung
- 41: Spachteleinheit
- 42: Reservoir
- 43: Trockenstufe
- 44: Mittel
- 45: SmartHome-Einrichtung
- 46: Softwareapplikation
- 47: Tragbares Datenverarbeitungsgerät
- 48: Smartphone
- 49: Sensor
- 50: Bildschirm
- 51: LED-Lichtquelle
- 52: Fensterrahmen
- 53: Modul

## Patentansprüche

1. Kabellegesystem (100) zur automatisierten Verlegung von Kabeln (10) in einem Gebäude (11), umfassend eine Kabellegevorrichtung (200), insbesondere einen Kabelinstallationsroboter (12), mit einer fahrbaren Basis (13) und einer auf der Basis (13) angeordneten Verlegeeinheit (17) ausgebildet zum Verlegen eines Kabels (10), wobei die Kabellegevorrichtung (200) eine Positionsbestimmungseinheit (20) zur Bestimmung der Position verlegter Kabelabschnitte (10a) umfasst, wobei das Kabellegesystem ausgebildet ist, die Position verlegter Kabelabschnitte (10a) in einer Speichervorrichtung (23) abzuspeichern, **dadurch gekennzeichnet, dass** die Kabellegevorrichtung (200) einen Teleskoparm (15) und/oder Klapparm aufweist, wobei die Verlegeeinheit (17) an dem Teleskoparm (15) und/oder Klapparm befestigt ist, dass die Positionsbestimmungseinheit (20) Lagesensoren (30) zur Bestimmung einer Ausrichtung und einer horizontalen Lage der Kabellegevorrichtung (200), und Stellungssensoren (31) zur Bestimmung der Stellung oder Position der an dem Teleskoparm (15) oder Klapparm befestigten Verlegeeinheit (17) umfasst, dass die Kabellegevorrichtung (200) eine Sensoranordnung (27) umfasst, wobei die Sensoranordnung (27) zum Erstellen eines Grundrisses und/oder eines 3D-Modells eines Raums des Gebäudes (11) ausgebildet ist, und dass das Kabellegesystem eine Rechenvorrichtung (37) umfasst, wobei die Rechenvorrichtung (37) ausgebildet ist unter Verwendung eines erstellten Grundrisses oder 3D-Modells einen Verlegeplan zu erstellen, wobei der Verlegeplan die Position oder Lage der zu verlegenden Kabel (10) bzw. Kabelabschnitte (10a) und von elektrischen Einrichtungen oder Modulen (53) umfasst.

2. Kabellegesystem (100) nach Anspruch 1, **dadurch gekennzeichnet, dass** das Kabellegesystem ausgebildet ist, einen Installationsplan der verlegten Kabelabschnitte (10a) zu erzeugen.

3. Kabellegesystem (100) nach einem Anspruch 1 oder 2, **dadurch gekennzeichnet, dass** ein zu verlegendes Kabel (10) vorgesehen ist, wobei das zu verlegende Kabel (10) in regelmäßigen Abständen (34) eine Kennzeichnung (32), bevorzugt einen maschinenlesbaren Code (33), aufweist, und/oder dass die Kabellegevorrichtung (200) eine Kennzeichnungsvorrichtung (35) aufweist, wobei die Kennzeichnungsvorrichtung (35) ausgebildet ist, bevorzugt beim Verlegen des Kabels (10), das Kabel (10) in regelmäßigen Abständen (34) mit einer Kennzeichnung (32), bevorzugt mit einem maschinenlesbaren Code (33), zu versehen, wobei besonders bevorzugt jeder Kabelabschnitt (10a) eine Kennzeichnung (32) aufweist, und/oder wobei die Kennzeichnungsvorrichtung (35) ausgebildet ist, jeden Kabelabschnitt (10a) mit einer Kennzeichnung (32) zu versehen.

4. Kabellegesystem (100) nach Anspruch 3, **dadurch gekennzeichnet, dass** die Kennzeichnung (32) eine unendliche und/oder fortlaufende Kennzeichnung (32) ist, wobei die Kennzeichnung (32) sich in Abständen (34) entlang des Kabels (10) von weniger als 5 cm, bevorzugt von weniger als 3 cm, besonders bevorzugt von weniger als 1 cm, ändert, so dass jeder Kabelabschnitt (10a) mit einer Länge von weniger als 5 cm, bevorzugt von weniger als 3 cm, besonders bevorzugt von weniger als 1 cm, individuell gekennzeichnet ist.

5. Kabellegesystem (100) nach Anspruch 3 oder 4, **dadurch gekennzeichnet, dass** das Kabellegesystem ausgebildet ist, die Position verlegter Kabelabschnitte (10a) zusammen mit der auf dem Kabelabschnitt (10a) angeordneten Kennzeichnung (32) in der Speichervorrichtung (23) abzuspeichern.

6. Kabellegesystem (100) nach einem der vorgenannten Ansprüche, **dadurch gekennzeichnet, dass** das Kabellegesystem (100) ausgebildet ist, die Position verlegter Kabelabschnitte (10a) zusammen mit weiteren Informationen, insbesondere mit der Länge und/oder der Lage und/oder der Ausrichtung der verlegten Kabelabschnitte (10a), und/oder mit den Kennzeichnungen (32) weiterer mit dem jeweiligen Kabelabschnitt (10a) verbundener Kabelabschnitte (10a), und/oder mit den IP-Adressen von mit den verlegten Kabelabschnitten (10a) verbundenen oder zu verbindenden Modulen (53), und/oder einem Datum, in der Speichervorrichtung (23) abzuspeichern.

7. Kabellegesystem (100) nach einem der vorgenannten Ansprüche, **dadurch gekennzeichnet, dass** die Kabellegevorrichtung (200) eine Fräseinheit (16) umfasst, wobei die Fräseinheit (16) ausgebildet ist, einen Kabelkanal (18) in einer Wand (19) oder einem Mauerwerk des Gebäudes (11) herzustellen, wobei die Verlegeeinheit (17) ausgebildet ist, einen zu verlegenden Kabelabschnitt (10a) in einem von der Fräseinheit (16) hergestellten Kabelkanal (18) zu verlegen, wobei bevorzugt die Fräseinheit (16) einen Topfbohrer und/oder einen Langlochbohrer und oder eine Trennscheibe umfasst.

8. Kabellegesystem (100) nach einem der vorgenannten Ansprüche, **dadurch gekennzeichnet, dass** die Fräseinheit (16) an dem Teleskoparm (15) befestigt ist, und/oder dass die Kabellegevorrichtung (200) eine Staubabsaugvorrichtung (40) aufweist, und/oder dass die Kabellegevorrichtung (200) eine Spachteleinheit (41) und/oder eine Trockenstufe (43) zur Trocknung eines Spachtelmaterials umfasst.

9. Kabellegesystem (100) nach einem der vorgenannten Ansprüche, **dadurch gekennzeichnet, dass** die Sensoranordnung (27) einen Laserscanner und/oder einen LIDAR-Scanner (28), und/oder einen Peilsender und/oder einen Peilempfänger und/oder einen GPS-Empfänger (29) und/oder einen Kompass umfasst.

10. Kabellegesystem (100) nach einem der vorgenannten Ansprüche, **dadurch gekennzeichnet, dass** die Positionsbestimmungseinheit (20) die Sensoranordnung (27) umfasst, und/oder dass die Kabellegevorrichtung (200) einen Sensor (39) zur Bestimmung einer Materialbeschaffenheit von Wänden (19) oder von einem Mauerwerk des Gebäudes (11) aufweist.

11. Kabellegesystem (100) nach einem der vorgenannten Ansprüche, **dadurch gekennzeichnet, dass** die elektrischen Einrichtungen oder Module (53) Anschlussdosen und/oder Steckdosen und/oder Schalter und/oder Sensoren umfassen.

12. Kabellegesystem (100) nach einem der vorgenannten Ansprüche, **dadurch gekennzeichnet, dass** die Kabellegevorrichtung (200) Mittel (44) für eine Aufputz-Verlegung zu verlegender Kabel (10) oder Kabelabschnitte (10a) aufweist, und/oder dass die fahrbare Basis (13) der Kabellegevorrichtung (200) Räder (24) aufweist, wobei die Räder (24) um eine Vertikalachse (25), vorzugsweise um 180°, weiter bevorzugt um 360°, schwenkbar sind.

13. Kabellegesystem (100) nach einem der vorgenannten Ansprüche, **dadurch gekennzeichnet, dass** eine zentrale Datenverarbeitungsvorrichtung (22), insbesondere ein Server (21), vorgesehen ist, wobei die zentrale Datenverarbeitungsvorrichtung (22) bevorzugt ausgebildet ist, die Abschirmung und/oder eine Ader eines verlegten Kabels (10) mit einer hochfrequenten Wechselspannung zu beaufschlagen, und/oder dass die zentrale Datenverarbeitungsvorrichtung (22) ausgebildet ist, Licht in ein durchsichtiges Material (36a) einer Isolierung des Kabels (10) einzukoppeln.

14. Kabellegesystem (100) nach einem der vorgenannten Ansprüche, **dadurch gekennzeichnet, dass** eine Software-Applikation (46) für ein tragbares Datenverarbeitungsgerät (47) vorgesehen ist, wobei mittels der auf dem tragbaren Datenverarbeitungsgerät (47) ausgeführten Software-Applikation (46) die Positionen verlegter Kabelabschnitte (10a), bevorzugt mit einem Erweiterte-Realität-Verfahren, dargestellt werden können.

## Claims

1. Cable laying system (100) for the automated laying of cables (10) in a building (11), comprising a cable laying device (200), in particular a cable installation robot (12), with a movable base (13) and a laying unit (17) arranged on the base (13) and designed for laying a cable (10), wherein the cable laying device (200) comprises a position-determining unit (20) for determining the position of laid cable sections (10a), wherein the cable laying system is designed to store the position of laid cable sections (10a) in a storage device (23), **characterized in that** the cable laying device (200) has a telescopic arm (15) and/or folding arm, wherein the laying unit (17) is fastened to the telescopic arm (15) and/or folding arm, that the position-determining unit (20) comprises attitude sensors (30) for determining an orientation and a horizontal position of the cable laying device (200), and position sensors (31) for determining the posture or position of the laying unit (17) fastened to the telescopic arm (15) or folding arm, that the cable laying device (200) comprises a sensor arrangement (27), wherein the sensor arrangement (27) is designed to create a floor plan and/or a 3D model of a room of the building (11), and that the cable laying system comprises a computing device (37), wherein the computing device (37) is designed to create a laying plan using a created floor plan or 3D model, wherein the laying plan comprises the position or location of the cables (10) or cable sections (10a) to be laid and of electrical devices or modules (53).

2. Cable laying system (100) according to claim 1, **characterized in that** the cable laying system is designed to generate an installation plan of the laid cable sections (10a).

3. Cable laying system (100) according to claim 1 or 2, **characterized in that** a cable (10) to be laid is provided, wherein the cable (10) to be laid has, at regular intervals (34), a marking (32), preferably a machine-readable code (33), and/or that the cable laying device (200) has a marking device (35), wherein the marking device (35) is designed, preferably during the laying of the cable (10), to provide the cable (10), at regular intervals (34), with a marking (32), preferably with a machine-readable code (33), wherein most preferably each cable section (10a) has a marking (32), and/or wherein the marking device (35) is designed to provide each cable section (10a) with a marking (32).

4. Cable laying system (100) according to claim 3, **characterized in that** the marking (32) is an infinite and/or continuous marking (32), wherein the marking (32) changes at intervals (34) along the cable (10) of less than 5 cm, preferably of less than 3 cm, particularly preferably of less than 1 cm, so that each cable section (10a) with a length of less than 5 cm, preferably of less than 3 cm, particularly preferably of less than 1 cm, is individually marked.

5. Cable laying system (100) according to claim 3 or 4, **characterized in that** the cable laying system is designed to store the position of laid cable sections (10a) together with the marking (32) arranged on the cable section (10a) in the storage device (23).

6. Cable laying system (100) according to one of the preceding claims, **characterized in that** the cable laying system (100) is designed to store the position of laid cable sections (10a) together with further information, in particular with the length and/or the location and/or the orientation of the laid cable sections (10a), and/or with the markings (32) of further cable sections (10a) connected to the respective cable section (10a), and/or with the IP addresses of modules (53) connected or to be connected to the laid cable sections (10a), and/or a date, in the storage device (23).

7. Cable laying system (100) according to one of the preceding claims, **characterized in that** the cable laying device (200) comprises a milling unit (16), wherein the milling unit (16) is designed to produce a cable channel (18) in a wall (19) or in masonry of the building (11), wherein the laying unit (17) is designed to lay a cable section (10a) to be laid in a cable channel (18) produced by the milling unit (16), wherein preferably the milling unit (16) comprises a core drill and/or a long-hole drill and/or a cutting disc.

8. Cable laying system (100) according to one of the preceding claims, **characterized in that** the milling unit (16) is fastened to the telescopic arm (15), and/or that the cable laying device (200) has a dust extraction device (40), and/or that the cable laying device (200) comprises a filler unit (41) and/or a drying stage (43) for drying a filler material.

9. Cable laying system (100) according to one of the preceding claims, **characterized in that** the sensor arrangement (27) comprises a laser scanner and/or a LIDAR scanner (28), and/or a beacon transmitter and/or a beacon receiver and/or a GPS receiver (29) and/or a compass.

10. Cable laying system (100) according to one of the preceding claims, **characterized in that** the position-determining unit (20) comprises the sensor arrangement (27), and/or that the cable laying device (200) has a sensor (39) for determining a material property of walls (19) or of masonry of the building (11).

11. Cable laying system (100) according to one of the preceding claims, **characterized in that** the electrical devices or modules (53) comprise connection boxes and/or sockets and/or switches and/or sensors.

12. Cable laying system (100) according to one of the preceding claims, **characterized in that** the cable laying device (200) has means (44) for a surface-mounted laying of cables (10) or cable sections (10a) to be laid, and/or that the movable base (13) of the cable laying device (200) has wheels (24), wherein the wheels (24) are pivotable about a vertical axis (25), preferably by 180°, more preferably by 360°.

13. Cable laying system (100) according to one of the preceding claims, **characterized in that** a central data processing device (22), in particular a server (21), is provided, wherein the central data processing device (22) is preferably designed to apply a high-frequency AC voltage to the shielding and/or a conductor of a laid cable (10), and/or that the central data processing device (22) is designed to couple light into a transparent material (36a) of an insulation of the cable (10).

14. Cable laying system (100) according to one of the preceding claims, **characterized in that** a software application (46) for a portable data processing device (47) is provided, wherein by means of the software application (46) executed on the portable data processing device (47) the positions of laid cable sections (10a) can be shown, preferably by means of an augmented reality method.

## Revendications

1. Système de pose de câbles (100) pour la pose automatisée de câbles (10) dans un bâtiment (11), comprenant un dispositif de pose de câbles (200), en particulier un robot d'installation de câbles (12), avec une base mobile (13) et une unité de pose (17) disposée sur la base (13), conçue pour poser un câble (10), dans lequel le dispositif de pose de câbles (200) comprend une unité de détermination de position (20) pour déterminer la position de sections de câble posées (10a), dans lequel le système de pose de câbles est conçu pour enregistrer la position de sections de câble posées (10a) dans un dispositif de mémoire (23), **caractérisé en ce que** le dispositif de pose de câbles (200) présente un bras télescopique (15) et/ou un bras rabattable, dans lequel l'unité de pose (17) est fixée au bras télescopique (15) et/ou au bras rabattable, **en ce que** l'unité de détermination de position (20) comprend des capteurs de position (30) pour déterminer une orientation et une position horizontale du dispositif de pose de câbles (200), et des capteurs de réglage (31) pour déterminer le réglage ou la position de l'unité de pose (17) fixée au bras télescopique (15) ou au bras rabattable, **en ce que** le dispositif de pose de câbles (200) comprend un agencement de capteurs (27), dans lequel l'agencement de capteurs (27) est conçu pour créer un plan au sol et/ou un modèle 3D d'une pièce du bâtiment (11), et **en ce que** le système de pose de câbles comprend un dispositif de calcul (37), dans lequel le dispositif de calcul (37) est conçu pour créer, en utilisant un plan au sol ou un modèle 3D créé, un plan de pose, dans lequel le plan de pose comprend la position ou l'emplacement des câbles (10) ou sections de câble (10a) à poser et des équipements ou modules électriques (53).

2. Système de pose de câbles (100) selon la revendication 1, **caractérisé en ce que** le système de pose de câbles est conçu pour générer un plan d'installation des sections de câble posées (10a).

3. Système de pose de câbles (100) selon l'une des revendications 1 ou 2, **caractérisé en ce qu'**un câble (10) à poser est prévu, dans lequel le câble (10) à poser présente à intervalles réguliers (34) un marquage (32), de préférence un code lisible par machine (33), et/ou **en ce que** le dispositif de pose de câbles (200) présente un dispositif de marquage (35), dans lequel le dispositif de marquage (35) est conçu, de préférence lors de la pose du câble (10), pour munir le câble (10), à intervalles réguliers (34), d'un marquage (32), de préférence d'un code lisible par machine (33), dans lequel, de manière particulièrement préférée, chaque section de câble (10a) présente un marquage (32), et/ou dans lequel le dispositif de marquage (35) est conçu pour munir chaque section de câble (10a) d'un marquage (32).

4. Système de pose de câbles (100) selon la revendication 3, **caractérisé en ce que** le marquage (32) est un marquage (32) infini et/ou continu, dans lequel le marquage (32) change à intervalles (34) le long du câble (10) de moins de 5 cm, de préférence de moins de 3 cm, de manière particulièrement préférée de moins de 1 cm, de sorte que chaque section de câble (10a) d'une longueur inférieure à 5 cm, de préférence inférieure à 3 cm, de manière particulièrement préférée inférieure à 1 cm, est marquée individuellement.

5. Système de pose de câbles (100) selon la revendication 3 ou 4, **caractérisé en ce que** le système de pose de câbles est conçu pour enregistrer la position de sections de câble posées (10a) conjointement avec le marquage (32) disposé sur la section de câble (10a) dans le dispositif de mémoire (23).

6. Système de pose de câbles (100) selon l'une des revendications précédentes, **caractérisé en ce que** le système de pose de câbles (100) est conçu pour enregistrer la position de sections de câble posées (10a) conjointement avec d'autres informations, en particulier avec la longueur et/ou l'emplacement et/ou l'orientation des sections de câble posées (10a), et/ou avec les marquages (32) d'autres sections de câble (10a) reliées à la section de câble respective (10a), et/ou avec les adresses IP de modules (53) reliés ou à relier aux sections de câble posées (10a), et/ou une date, dans le dispositif de mémoire (23).

7. Système de pose de câbles (100) selon l'une des revendications précédentes, **caractérisé en ce que** le dispositif de pose de câbles (200) comprend une unité de fraisage (16), dans lequel l'unité de fraisage (16) est conçue pour réaliser une gaine de câble (18) dans un mur (19) ou une maçonnerie du bâtiment (11), dans lequel l'unité de pose (17) est conçue pour poser une section de câble (10a) à poser dans une gaine de câble (18) réalisée par l'unité de fraisage (16), dans lequel, de préférence, l'unité de fraisage (16) comprend une scie-cloche et/ou une perceuse pour trous oblongs et/ou un disque de tronçonnage.

8. Système de pose de câbles (100) selon l'une des revendications précédentes, **caractérisé en ce que** l'unité de fraisage (16) est fixée au bras télescopique (15), et/ou **en ce que** le dispositif de pose de câbles (200) présente un dispositif d'aspiration de poussière (40), et/ou **en ce que** le dispositif de pose de câbles (200) comprend une unité d'enduisage (41) et/ou un étage de séchage (43) pour le séchage d'un matériau d'enduisage.

9. Système de pose de câbles (100) selon l'une des revendications précédentes, **caractérisé en ce que** l'agencement de capteurs (27) comprend un scanner laser et/ou un scanner LIDAR (28), et/ou un émetteur de radiogoniométrie et/ou un récepteur de radiogoniométrie et/ou un récepteur GPS (29) et/ou une boussole.

10. Système de pose de câbles (100) selon l'une des revendications précédentes, **caractérisé en ce que** l'unité de détermination de position (20) comprend l'agencement de capteurs (27), et/ou **en ce que** le dispositif de pose de câbles (200) présente un capteur (39) pour déterminer une nature de matériau de murs (19) ou d'une maçonnerie du bâtiment (11).

11. Système de pose de câbles (100) selon l'une des revendications précédentes, **caractérisé en ce que** les équipements ou modules électriques (53) comprennent des boîtes de raccordement et/ou des prises de courant et/ou des interrupteurs et/ou des capteurs.

12. Système de pose de câbles (100) selon l'une des revendications précédentes, **caractérisé en ce que** le dispositif de pose de câbles (200) présente des moyens (44) pour une pose en saillie de câbles (10) ou de sections de câble (10a) à poser, et/ou **en ce que** la base mobile (13) du dispositif de pose de câbles (200) présente des roues (24), dans lequel les roues (24) sont pivotantes autour d'un axe vertical (25), de préférence de 180°, plus préférablement de 360°.

13. Système de pose de câbles (100) selon l'une des revendications précédentes, **caractérisé en ce qu'**un dispositif central de traitement de données (22), en particulier un serveur (21), est prévu, dans lequel le dispositif central de traitement de données (22) est de préférence conçu pour appliquer une tension alternative haute fréquence au blindage et/ou à un conducteur d'un câble posé (10), et/ou **en ce que** le dispositif central de traitement de données (22) est conçu pour coupler de la lumière dans un matériau transparent (36a) d'une isolation du câble (10).

14. Système de pose de câbles (100) selon l'une des revendications précédentes, **caractérisé en ce qu'**une application logicielle (46) pour un appareil portable de traitement de données (47) est prévue, dans lequel, au moyen de l'application logicielle (46) exécutée sur l'appareil portable de traitement de données (47), les positions de sections de câble posées (10a), de préférence avec un procédé de réalité augmentée, peuvent être représentées.
